# DEMANDE DE BREVET EUROPEEN

(11) **EP 4 821 563 A1**
(43) Date de publication de la demande: **14.10.2026**
(21) Numéro de dépôt: 26171345.7
(22) Date de dépôt: 09.04.2026
(51) Int. Cl.: A62B 1/14, A62B 35/00

(54) **DISPOSITIF DE BLOCAGE D'UN ÉLÉMENT FILAIRE**

(30) Priorité: 10.04.2025 FR 2503867
(71) Demandeur: Zedel, 38920 Crolles (FR)
(72) Inventeur: MAURICE, Alain, 38660 Le Plateau Des Petites Roches (FR); CHAUMONTET, Michael, 38920 Crolles (FR)
(74) Mandataire: Talbot, Alexandre

(57) **Abrégé**

Un dispositif de blocage (1) comporte un corps (5) définissant une goulotte (6), une platine (4) montée mobile entre une position de travail et une position d'installation avec un galet (2) rotatif. Un dispositif de commande (7) possède un premier taquet (7a) et un deuxième taquet (7b). Lorsqu'au moins un du premier taquet (7a) et du deuxième taquet (7b) est dans une position de blocage, le dispositif de commande (7) est dans une position bloquée. La platine (4) étant dans la position de travail, le premier taquet (7a) et le deuxième taquet (7b) dans la position de blocage sont disposés en saillie ou affleurants de la première paroi (5a). Le premier taquet (7a) et le deuxième taquet (7b) sont disposés dans la position de blocage, le deuxième taquet (7b) est plus en saillie que le premier taquet (7a) par rapport à la première paroi (5a).

## Description

### Domaine technique

L'invention est relative à un dispositif de blocage d'un élément filaire.

### Technique antérieure

Lors d'une intervention en hauteur, pour assurer la sécurité de la personne qui intervient, il est nécessaire de la connecter à une corde qui fait ligne de vie. La personne est accrochée à un dispositif antichute qui circule le long de la ligne de vie. Le dispositif antichute possède un galet rotatif qui est configuré pour tourner dans un sens ou dans un autre selon que la personne monte ou descend.

Lors d'une chute, la vitesse verticale du dispositif antichute le long de la ligne de vie atteint une valeur seuil ce qui correspond à une vitesse de rotation seuil d'un galet par rapport à une platine du dispositif antichute. Lorsque la vitesse de rotation seuil est atteinte, le galet se bloque ce qui a pour effet de bloquer le dispositif antichute sur la ligne de vie. La personne accrochée au dispositif antichute est alors arrêtée dans sa chute.

Pour former un dispositif antichute efficace et agréable à utiliser, il est important que le dispositif antichute puisse suivre fidèlement la progression du cordiste, c'est-à-dire que le dispositif antichute se déplace avec un faible frottement dans un sens ou dans l'autre. Il est également important que le dispositif antichute détecte efficacement la vitesse de circulation du dispositif antichute le long de la ligne de vie ce qui correspond à un contact important entre le galet et la ligne de vie et donc à un frottement non négligeable. Une configuration de dispositif antichute est commercialisée par la demanderesse sous la dénomination « ASAP ».

Différentes configurations de dispositif antichute sont divulguées dans les documents US 2014/0196985 et US 2014/0262611.

Il est connu, du document US 2014/0196989, un dispositif antichute muni d'un galet rotatif qui est mobile par rapport à un corps afin de définir une position de travail et une position d'installation. Dans la position de travail, le galet plaque la corde contre le fond de la goulotte pour avoir un bon contact avec la corde et mieux détecter les déplacements relatifs entre le dispositif antichute et la corde. Dans la position d'installation, le galet ouvre la goulotte afin de pouvoir installer ou retirer la corde.

Lorsque la corde présente un diamètre important, le galet se rapproche de la position d'installation. Les taquets qui sont utilisés pour maintenir le galet dans la position de travail sont enfoncés moins profondément dans le corps. Afin que les taquets soient toujours accessibles et mobile à l'intérieur du volume défini par le corps, on utilise un corps volumineux et/ou des taquets de petites dimensions.

On cherche à former un dispositif antichute qui est moins encombrant que les configurations de l'art antérieur. On constate que plus le corps est petit et plus on a tendance à réduire les dimensions des taquets ce qui peut rendre plus compliqué leur utilisation et notamment lorsque l'utilisateur porte des gants. Enfin, la miniaturisation du dispositif antichute ne doit pas modifier son comportant et plus particulièrement sa capacité à bloquer une chute.

### Objet de l'invention

Un objet de l'invention consiste à prévoir un dispositif de blocage qui est moins sensible à l'ouverture non-intentionnelle du dispositif antichute tout en autorisant une ouverture plus facile.

On tend à résoudre ce problème au moyen d'un dispositif de blocage pour bloquer un élément filaire comportant :
- un corps définissant une goulotte destinée à recevoir l'élément filaire et une première paroi, la première paroi étant en vis-à-vis d'un fond de la goulotte dans une observation selon une première direction, la première direction étant perpendiculaire à une direction de déplacement de l'élément filaire le long de la goulotte ;
- un galet monté rotatif autour d'un premier arbre de rotation, le premier arbre de rotation définissant un premier axe de rotation pour le galet, la première direction passant par l'axe de rotation du galet ;

- une platine fixée au corps et montée mobile par rapport au corps entre une position de travail et une position d'installation, le premier arbre de rotation étant fixé à la platine pour se déplacer avec la platine, dans la position de travail, le galet étant destiné à appuyer l'élément filaire contre un fond de la goulotte, dans la position d'installation, le galet libérant l'accès à la goulotte pour installer ou retirer l'élément filaire ;
- un dispositif de commande présentant une position bloquée et une position débloquée, dans la position bloquée le dispositif de commande interdit un déplacement de la platine depuis la position de travail jusqu'à la position d'installation, dans la position débloquée le dispositif de commande autorise un déplacement de la platine depuis la position de travail jusqu'à la position d'installation ;
dans lequel le dispositif de commande possède un premier taquet et un deuxième taquet montés chacun librement mobiles entre une position de blocage et une position de déblocage, lorsqu'au moins un du premier taquet et du deuxième taquet est dans la position de blocage, le dispositif de commande est dans la position bloquée et lorsque le premier taquet et le deuxième taquet sont dans la position de déblocage, le dispositif de commande est dans la position débloquée.

Le dispositif de blocage est remarquable en ce que, la platine étant dans la position de travail, le premier taquet et le deuxième taquet dans la position de blocage sont disposés en saillie ou affleurants de la première paroi ; et en ce que le premier taquet et le deuxième taquet étant disposés dans la position de blocage, le deuxième taquet est plus en saillie que le premier taquet par rapport à la première paroi.

De manière préférentielle, le premier taquet est monté mobile dans un premier plan entre la position de blocage et la position de déblocage. Le deuxième taquet possède un capot s'étendant au-dessus du premier taquet selon le premier plan.

Avantageusement, lorsque le premier taquet et le deuxième taquet sont dans la position de blocage, le capot est disposé plus proche de la première paroi qu'une paroi de sommet du premier taquet.

Dans un développement avantageux, le premier taquet et le deuxième taquet sont montés à pivotement autour d'un même arbre de pivotement accroché à la platine.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
[Fig. 1] : illustre schématiquement une vue de face d'un dispositif antichute, les deux taquets étant dans la position de blocage ;
[Fig. 2] : illustre schématiquement une vue de face d'un dispositif antichute, le premier taquet étant dans la position de blocage et le deuxième taquet étant dans la position de déblocage ;
[Fig. 3] : illustre schématiquement une vue de côté d'un dispositif antichute, les deux taquets étant dans la position de blocage ;
[Fig. 4] : illustre schématiquement une vue de côté d'un dispositif antichute, le premier taquet étant dans la position de blocage et le deuxième taquet étant dans la position de déblocage ;
[Fig. 5] : illustre schématiquement une vue en perspective d'un dispositif antichute, les deux taquets étant dans la position de blocage ;
[Fig. 6] : illustre schématiquement une vue en perspective d'un dispositif antichute, le premier taquet étant dans la position de blocage et le deuxième taquet étant dans la position de déblocage ;
[Fig. 7] : illustre schématiquement une autre vue en perspective d'un dispositif antichute, les deux taquets étant dans la position de blocage ;
[Fig. 8] : illustre schématiquement une autre vue en perspective d'un dispositif antichute, le premier taquet étant dans la position de blocage et le deuxième taquet étant dans la position de déblocage.

### Description des modes de réalisation

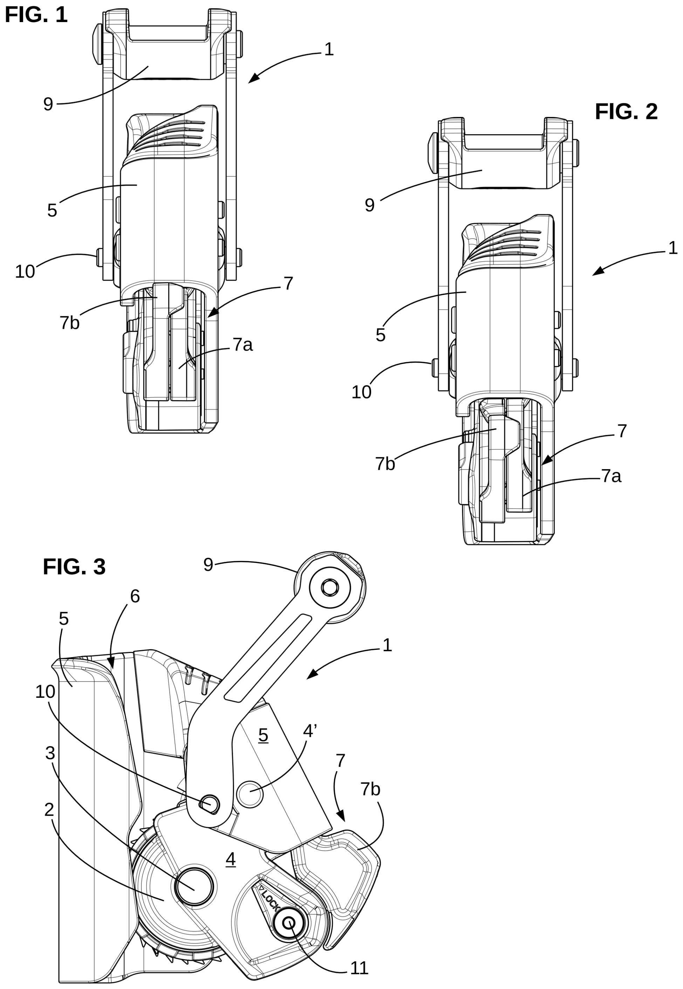

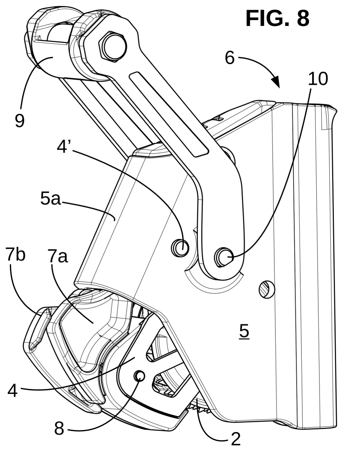

Les figures 1 à 8 illustrent différentes vues d'un dispositif de blocage 1 configuré pour bloquer un élément filaire 12 de préférence une corde. Le dispositif de blocage 1 est préférentiellement un dispositif antichute. Le dispositif de blocage 1 comporte un galet 2 monté mobile en rotation dans au moins un premier sens de rotation autour d'un premier arbre de rotation 3. Le premier arbre de rotation 3 définit un premier axe de rotation pour le galet 2. Le dispositif de blocage 1 définit un chemin destiné au passage de l'élément filaire 12. Le chemin définit un passage traversant dont une paroi est formée par le galet 2 de sorte que le coulissement de l'élément filaire 12 dans le dispositif de blocage 1 cause la rotation du galet 2.

Le dispositif de blocage 1 est préférentiellement configuré pour bloquer la rotation du galet 2 dans au moins un premier sens de rotation de préférence lorsque la vitesse de rotation du galet 2 autour du premier axe de rotation atteint une valeur seuil. De manière préférentielle, le galet 2 est configuré pour tourner librement dans les deux sens de rotation au moins lorsque la vitesse de rotation est inférieure à la valeur seuil.

Le dispositif de blocage 1 comporte un dispositif de détection configuré pour détecter la vitesse de rotation du galet 2 selon le premier sens de rotation. Le dispositif de détection est configuré pour autoriser la rotation du galet 2 lorsque la vitesse de rotation dans le premier sens de rotation est inférieure à la vitesse seuil et pour empêcher la rotation du galet 2 lorsque la vitesse de rotation du galet 2 dans le premier sens de rotation atteint la vitesse seuil. Lorsque le dispositif de détection détecte que la vitesse de rotation dans le premier sens de rotation correspond à la vitesse seuil, le galet 2 se bloque ce qui a pour effet de bloquer l'élément filaire 12 éventuellement présent dans le dispositif de blocage 1. De préférence, le dispositif de blocage 1 autorise la rotation du galet 2 dans le deuxième sens de rotation indépendamment de la vitesse de rotation.

Le galet 2 est fixé au premier arbre de rotation 3. Le premier arbre de rotation 3 traverse le galet 2 ou s'enfonce dans le galet 2 de sorte que le galet 2 tourne autour du premier arbre de rotation 3. Le premier arbre de rotation 3 est fixé à une platine 4 et se déplace préférentiellement de manière similaire à la platine 4.

La platine 4 est fixée à un corps 5 qui définit une goulotte 6. La goulotte 6 est destinée à recevoir l'élément filaire 12. La goulotte 6 s'étend selon une direction longitudinale ZZ qui correspond à une direction longitudinale de l'élément filaire 12 disposé à l'intérieur de la goulotte 6. La direction longitudinale ZZ correspond également à la direction de déplacement de l'élément filaire 12 par rapport au corps 5 lorsque l'élément filaire 12 est disposé entre le fond de la goulotte 6 et le galet 2.

La platine 4 est montée mobile par rapport au corps 5 entre une position de travail et une position d'installation. Dans la position de travail, le galet 2 appuie sur l'élément filaire 12 pour placer l'élément filaire 12 contre le fond de la goulotte 6. L'élément filaire 12 est disposé entre le fond de la goulotte 6 et le galet 2. Lorsque le dispositif de blocage 1 se déplace le long de l'élément filaire 12, c'est-à-dire selon la direction longitudinale ZZ, le galet 2 est en mesure de tourner pour suivre le déplacement le long de l'élément filaire 12. Il est avantageux que le dispositif de blocage 1 possède un ressort ayant une extrémité connectée au corps 5 et une autre extrémité connectée à la platine 4 dont l'état de plus faible déformation ou l'état de repos correspond au galet 2 disposé à proximité immédiate du fond de la goulotte 6. Dans la position de travail, l'élément filaire 12 empêche le galet 2 d'atteindre sa position de repos et donc applique une sollicitation sur le ressort ce qui permet d'avoir un bon contact entre le galet 2 et l'élément filaire 12 en appui contre le fond de la goulotte 6.

Dans la position d'installation, le galet 2 s'éloigne du fond de la goulotte 6 et il s'éloigne suffisamment du fond de la goulotte 6 pour délimiter une fente avec le corps 5. La fente autorise une introduction ou un retrait de l'élément filaire 12.

L'introduction et le retrait de l'élément filaire 12 sont réalisés avec une composante parallèle à l'axe de rotation du galet 2.

Pour éviter un déplacement non désiré de la platine 4 depuis la position de travail jusqu'à la position d'installation ce qui se traduit par une perte de sensibilité dans les déplacements le long de l'élément filaire 12, le dispositif de blocage 1 possède un dispositif de commande 7 qui présente une position bloquée et une position débloquée.

Dans la position bloquée, le dispositif de commande 7 maintient la platine 4 dans la position de travail. En d'autres termes, la platine 4 est incapable de quitter la position de travail pour atteindre la position d'installation. Dans la position débloquée, le dispositif de commande 7 autorise un déplacement de la platine 4 depuis la position de travail jusqu'à la position d'installation.

De manière avantageuse, lorsque la platine 4 est dans la position d'installation, il est possible que la platine 4 atteigne la position de travail indépendamment de la position prise par le dispositif de commande 7. Le dispositif de commande 7 n'est pas en mesure d'empêcher un déplacement de la platine 4 jusqu'à la position de travail y compris lorsque le dispositif de commande 7 est dans une position bloquée. Dans une alternative de réalisation, le dispositif de commande 7 dans la position bloquée empêche un déplacement de la platine 4 depuis la position d'installation jusqu'à la position de travail.

Le dispositif de commande 7 possède un premier taquet 7a et un deuxième taquet 7b. Chacun du premier taquet 7a et du deuxième taquet 7b possède une position de blocage et une position de déblocage. Les figures 1, 3, 5 et 7 illustrent le premier taquet 7a et le deuxième taquet 7b dans la position de blocage. Les figures 2, 4, 6 et 8 illustrent le premier taquet 7a dans la position de blocage et le deuxième taquet 7b dans la position de déblocage.

Lorsqu'au moins un du premier taquet 7a et du deuxième taquet 7b est dans la position de blocage, la platine 4 est incapable de se déplacer depuis la position de travail jusqu'à la position d'installation. Il est particulièrement avantageux que chaque taquet puisse se déplacer indépendamment de l'autre taquet pour qu'il soit plus difficile d'avoir le dispositif de commande 7 dans la position débloquée.

Pour obtenir le dispositif de commande 7 dans la position débloquée, il est nécessaire d'agir simultanément sur le premier taquet 7a et sur le deuxième taquet 7b. Il est avantageux que le premier taquet 7a et le deuxième taquet 7b soient associés à un ressort dont la position de repos ou de plus faible sollicitation est la position de blocage.

Dans un mode de réalisation préférentiel, chacun du premier taquet 7a et du deuxième taquet 7b dans la position de blocage forme un obstacle s'opposant au déplacement de la platine 4 hors de la position de travail. Chacun du premier taquet 7a et du deuxième taquet 7b prend appui d'une part contre le corps 5 et d'autre part contre la platine 4 pour empêcher le déplacement de la platine 4 hors de la position de travail.

Afin de limiter l'encombrement du corps 5 sans dégrader l'utilisation du dispositif de commande 7, il est avantageux que le premier taquet 7a et le deuxième taquet 7b possèdent chacun une portion qui soit disposée en saillie du corps 5 ou affleurante du corps 5 lorsque le premier taquet 7a et le deuxième taquet 7b sont chacun dans la position de blocage et que la platine 4 est dans la position de travail. Préférentiellement, le corps 5 définit une première paroi 5a qui est face à la goulotte 6 dans une observation selon une première direction. La première direction est une direction perpendiculaire à l'axe longitudinal ZZ de la goulotte 6 qui correspond à l'axe longitudinal de l'élément filaire 12 installé dans la goulotte 6 et qui correspond à la direction de déplacement de l'élément filaire 12 par rapport au corps 5. La première direction passe par l'axe de rotation du galet 2.

La disposition en saillie ou affleurante est observée selon une direction parallèle à l'axe de rotation du galet 2. La disposition en saillie ou affleurante est observée vis-à-vis du prolongement de la première paroi 5a.

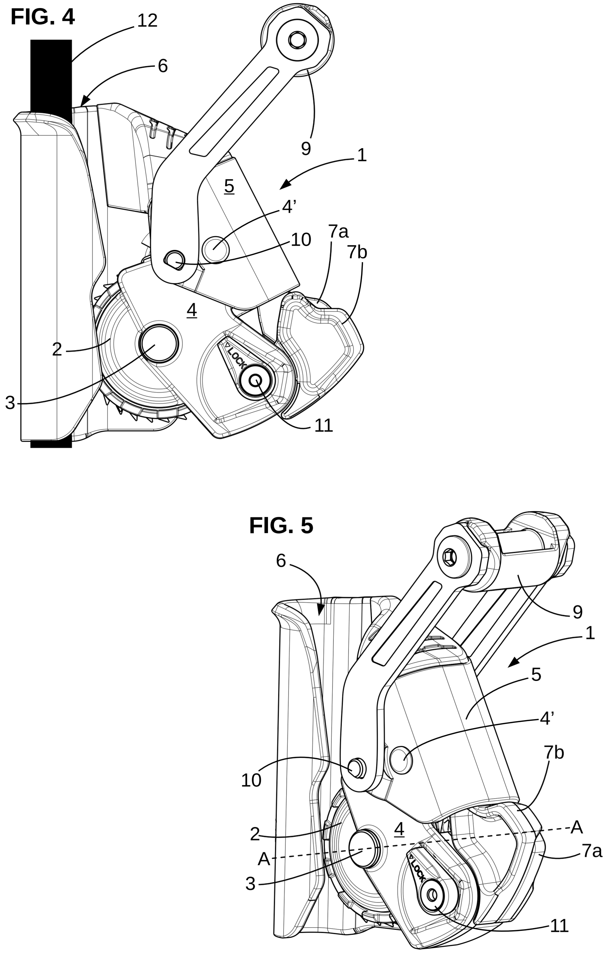

L'élément filaire 12 est disposé entre la goulotte 6 et la première paroi 5a. La première paroi 5a s'étend depuis une extrémité haute jusqu'à une extrémité basse. L'extrémité haute et l'extrémité basse sont des extrémités opposées selon la direction longitudinale ZZ. Lorsque la platine 4 est dans la position de travail et que le premier taquet 7a et le deuxième taquet 7b sont dans la position de blocage, le premier taquet 7a et le deuxième taquet 7b font saillie ou sont affleurants du plan défini par la première paroi 5a depuis l'extrémité haute jusqu'à l'extrémité basse. La disposition en saillie ou affleurante est visible sur les figures 3 et 4 qui représentent des observations selon l'axe de rotation du galet 2. Les taquets sont dans le prolongement de l'extrémité basse.

L'installation en saillie ou affleurante des taquets dans le prolongement de la première paroi 5a permet de trouver facilement les taquets sans avoir à regarder le dispositif de blocage 1. Les taquets étant disposés en saillies ou affleurant et dans le prolongement de la première paroi 5a, ils sont plus facilement accessibles car il n'est plus nécessaire d'installer un doigt dans le corps 5 pour attraper les taquets et les déplacer de la position de blocage jusqu'à la position de déblocage. L'ouverture du dispositif de blocage 1 est facilitée.

Dans la position de blocage, le premier taquet 7a et le deuxième taquet 7b étant en saillie ou affleurant du corps 5, il est avantageux que le dispositif de commande 7 réduise les risques d'actionnement non-volontaire d'au moins un du premier taquet 7a et du deuxième taquet 7b pour maintenir la platine 4 en position de travail.

Avantageusement, le dispositif de commande 7 est configuré pour que lorsque le premier taquet 7a est dans la position de blocage, le déplacement du deuxième taquet 7b est sans effet sur le premier taquet 7a et inversement. Préférentiellement, lorsque le deuxième taquet 7b est dans la position de déblocage, le déplacement du premier taquet 7a est sans effet sur le deuxième taquet 7b et inversement. Bien que les deux taquets soient plus facilement accessibles que dans la configuration selon l'art antérieur, le déplacement de la platine 4 de la positon de travail jusqu'à la position d'installation n'est possible qu'après avoir sollicité simultanément le premier taquet 7a et le deuxième taquet 7b,

Il est avantageux que le deuxième taquet 7b dans la position de blocage soit plus saillant de la première paroi 5a que le premier taquet 7a dans la position de blocage. Le deuxième taquet 7b s'étend plus haut au-dessus de la première paroi 5a. En cas de glissement d'un objet le long de la première paroi 5a, l'objet à plus de chances d'accrocher le deuxième taquet 7b que le premier taquet 7a de sorte que le risque de déplacement involontaire du premier taquet 7a est plus faible. Par « plus saillant », on entend que le premier taquet 7a peut être affleurant et le deuxième taquet 7b est saillant ou que le premier taquet 7a et le deuxième taquet 7b sont tous les deux saillants.

Le premier taquet 7a étant moins saillant que le deuxième taquet 7b, un élément qui glisse le long de la première paroi 5a et qui arrive en contact du deuxième taquet 7b a moins de chance d'accrocher le premier taquet 7a.

Il est encore plus avantageux que le deuxième taquet 7b forme un capot au-dessus du premier taquet 7a. Le deuxième taquet 7b s'étend en vis-à-vis du premier taquet 7a dans un plan contenant le déplacement du premier taquet 7a entre la position de blocage et la position de déblocage, c'est-à-dire un plan qui contient les multiples positions accessibles au premier taquet 7a entre la position de blocage et la position de déblocage. Le deuxième taquet 7b s'étendant face au premier taquet 7a et au-dessus du premier taquet 7, la probabilité qu'un objet glissant le long de la première paroi 5a accroche le premier taquet 7a est très faible. La probabilité d'accrocher le deuxième taquet 7b augmente mais comme le platine 4 ne peut pas quitter la position de travail tant que le premier taquet 7a est dans la position de blocage, la probabilité d'un déplacement involontaire de la platine 4 est très faible.

De manière préférentielle, dans la position de blocage, la paroi qui forme le sommet du premier taquet 7a est plus éloignée de la première paroi 5a que la paroi qui forme le sommet du deuxième taquet 7b. L'éloignement est observé selon la direction d'extension de la première paroi 5a depuis l'extrémité haute jusqu'à l'extrémité basse.

Le sommet d'un taquet est la partie du taquet qui est destinée à être touchée lorsqu'un objet glisse le long de la première paroi 5a jusqu'au taquet. Par exemple, lorsque le taquet est monté à pivotement, le sommet du taquet peut être la paroi la plus éloignée de l'axe de pivotement.

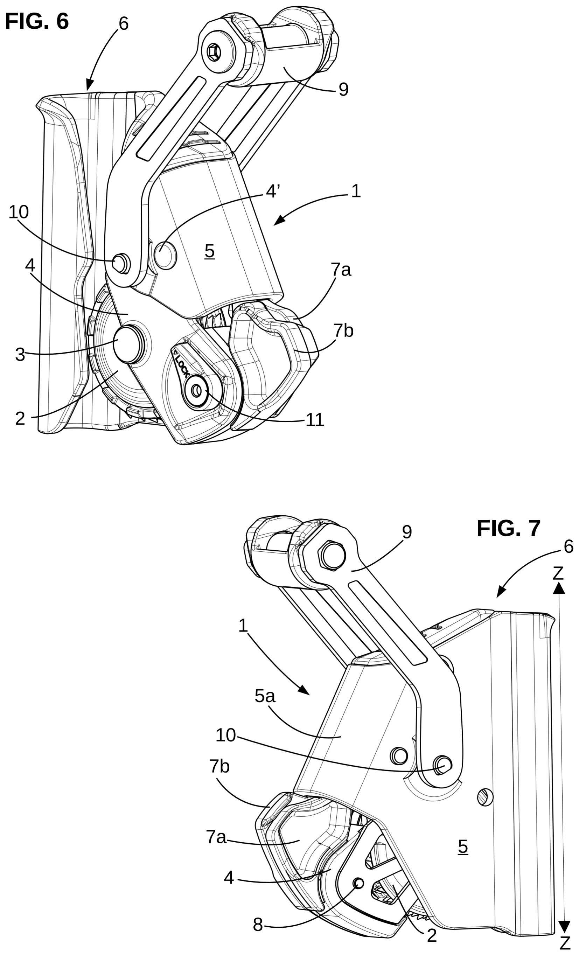

**En** plaçant le sommet du premier taquet 7a plus éloigné de la première paroi 5a que le sommet du deuxième taquet 7b, on augmente la probabilité qu'un objet glissant le long de la première paroi 5a entre en contact avec le deuxième taquet 7b sans agir sur le premier taquet 7a. Le pivotement du deuxième taquet 7b peut induire une modification de la trajectoire de l'objet qui glisse le long de la première paroi 5a et réduire la probabilité d'accrocher le premier taquet 7a. Il est particulièrement avantageux que le capot, le cas échéant, soit disposé plus proche de la première paroi 5a que le sommet du premier taquet 7a. Comme cela est illustré à la figure 7, le deuxième taquet 7b présente un sommet qui est saillant de la première paroi 5a et qui est au contact du corps 5. Le premier taquet 7a présente une forme différente qui définit un vide entre le sommet et le corps 5 dans le prolongement de la première paroi 5a.

De manière préférentielle, le sommet du premier taquet 7a se présente sous la forme d'un arc de cercle dont le centre est l'axe de rotation du premier taquet 7a. Il est également avantageux que la paroi inférieure du sommet du deuxième taquet 7b soit un arc de cercle dont le centre est l'axe de rotation du premier taquet 7a et du deuxième taquet 7b. Cette configuration permet de définir un entrefer entre le premier taquet 7a et le deuxième taquet 7b qui se présente sous la forme d'un arc de cercle afin de faciliter le déplacement indépendant entre le premier taquet 7a et le deuxième taquet 7b.

De manière avantageuse, le premier taquet 7a et le deuxième taquet 7b définissent chacun une cavité 7' dans une paroi latérale ce qui facilite l'enfoncement d'un doigt pour réaliser le déplacement des taquets. Chaque cavité 7' est réalisée selon une direction perpendiculaire au plan représentatif du déplacement du taquet associé entre la position de blocage et la position de déblocage. Lorsque le premier taquet 7a et le deuxième taquet 7b sont disposés adjacents, les deux cavités 7' sont réalisées sur les parois latérales externes opposées. Cela permet, par exemple, de réaliser une préhension avec le pouce et l'index pour déplacer les deux taquets simultanément.

Dans un mode de réalisation préférentiel, la platine 4 est montée à pivotement par rapport au corps 5 entre la position de travail et la position d'installation. La platine 4 est montée à pivotement autour d'un arbre de platine 4' qui fixe la platine 4 avec le corps 5. Il est particulièrement avantageux que l'axe de pivotement de la platine 4 soit parallèle à l'axe de rotation du galet 2. La position de travail de la platine 4 est définie par le diamètre de l'élément filaire 12 qui est installé dans la goulotte 6. Plus le diamètre est important et plus le premier taquet 7a et le deuxième taquet 7b peuvent être saillants par rapport à la première paroi 5a. Par exemple, plus le diamètre de l'élément filaire 12 est important et plus le galet 2 s'éloigne du fond de la goulotte 6 pour se rapprocher de la première paroi 5a.

Avantageusement, au moins l'un du premier taquet 7a et du deuxième taquet 7b est monté à pivotement par rapport à la platine 4. De manière préférentielle, le premier taquet 7a et le deuxième taquet 7b sont montés à pivotement autour d'un même arbre de taquet 8. Préférentiellement, l'arbre de taquet 8 est accroché à la platine 4 et il se déplace de manière identique à la platine 4.

Il est avantageux que le premier taquet 7a et que le deuxième taquet 7b soient montés à pivotement autour d'un axe de pivotement qui est parallèle à l'axe de pivotement de la platine 4. Préférentiellement, l'axe de pivotement de la platine 4 est différent de l'axe de pivotement des taquets. Avantageusement, le premier taquet 7a et le deuxième taquet 7b sont installés adjacents selon l'axe de pivotement des deux taquets. Dans ce cas de figure, le plan représentatif d'un déplacement du taquet est un plan perpendiculaire à l'axe de pivotement.

Dans un mode de réalisation particulier, l'arbre de taquet 8 est monté fixement par rapport au premier arbre de rotation 3.

Le dispositif de blocage est muni d'un dispositif de fixation 9 destiné à être fixé à l'utilisateur afin de suivre sa progression le long de l'élément filaire 12. Le dispositif de fixation 9 peut être fixé directement à l'utilisateur ou il peut être relié à l'utilisateur au moyen d'une longe ou d'un amortisseur d'énergie. Le dispositif de fixation 9 se présente préférentiellement sous la forme d'un U qui est monté à pivotement autour d'un arbre de fixation 10.

Dans le mode de réalisation particulier illustré aux figures 1 à 8, le corps 5 est formé par une feuille métallique déformée en forme de « C », le galet 2 et la platine 4 sont disposés au moins en partie à l'intérieur du « C ».

Le dispositif de blocage 1 peut être muni d'un verrou 11 qui présente une première position qui autorise la rotation du galet 2 dans les deux sens de rotation et une deuxième position qui n'autorise que la rotation dans un seul sens qui correspond à un déplacement du dispositif de blocage 1 uniquement dans le sens de la montée.

## Revendications

1. Dispositif de blocage (1) pour bloquer un élément filaire (12) comportant :
- un corps (5) définissant une goulotte (6) destinée à recevoir l'élément filaire (12) et une première paroi (5a), la première paroi (5a) étant en vis-à-vis d'un fond de la goulotte (6) dans une observation selon une première direction, la première direction étant perpendiculaire à une direction de déplacement de l'élément filaire (12) le long de la goulotte (6) ;
- un galet (2) monté rotatif autour d'un premier arbre de rotation (3), le premier arbre de rotation (3) définissant un premier axe de rotation (AA) pour le galet (2), la première direction passant par l'axe de rotation du galet (2) ;
- une platine (4) fixée au corps (5) et montée mobile par rapport au corps (5) entre une position de travail et une position d'installation, le premier arbre de rotation (3) étant fixé à la platine (4) pour se déplacer avec la platine (4), dans la position de travail, le galet (2) étant destiné à appuyer l'élément filaire (12) contre un fond de la goulotte (6), dans la position d'installation, le galet (2) libérant l'accès à la goulotte (6) pour installer ou retirer l'élément filaire (12) ;
- un dispositif de commande (7) présentant une position bloquée et une position débloquée, dans la position bloquée le dispositif de commande (7) interdit un déplacement de la platine (4) depuis la position de travail jusqu'à la position d'installation, dans la position débloquée le dispositif de commande (7) autorise un déplacement de la platine (4) depuis la position de travail jusqu'à la position d'installation ;
dans lequel le dispositif de commande (7) possède un premier taquet (7a) et un deuxième taquet (7b) montés chacun librement mobiles entre une position de blocage et une position de déblocage, lorsqu'au moins un du premier taquet (7a) et du deuxième taquet (7b) est dans la position de blocage, le dispositif de commande (7) est dans la position bloquée et lorsque le premier taquet (7a) et le deuxième taquet (7b) sont dans la position de déblocage, le dispositif de commande (7) est dans la position débloquée ;
**caractérisé en ce que,** la platine (4) étant dans la position de travail, le premier taquet (7a) et le deuxième taquet (7b) dans la position de blocage sont disposés en saillie ou affleurants de la première paroi (5a) ; et
**en ce que** le premier taquet (7a) et le deuxième taquet (7b) étant disposés dans la position de blocage, le deuxième taquet (7b) est plus en saillie que le premier taquet (7a) par rapport à la première paroi (5a).

2. Dispositif de blocage (1) d'un élément filaire (12) selon la revendication 1 dans lequel le premier taquet (7a) est monté mobile dans un premier plan entre la position de blocage et la position de déblocage, et dans lequel le deuxième taquet (7b) possède un capot s'étendant au-dessus du premier taquet (7a) selon le premier plan.

3. Dispositif de blocage (1) d'un élément filaire (12) selon la revendication 2 dans lequel, lorsque le premier taquet (7a) et le deuxième taquet (7b) sont dans la position de blocage, le capot est disposé plus proche de la première paroi (5a) qu'une paroi de sommet du premier taquet (7a).

4. Dispositif de blocage (1) d'un élément filaire (12) selon l'une des revendications 2 et 3 dans lequel le premier taquet (7a) et le deuxième taquet (7b) sont montés à pivotement autour d'un même arbre de pivotement accroché à la platine (4).
